# EUROPEAN PATENT APPLICATION

(11) **EP 1 935 624 A1**
(43) Date of publication of application: **25.06.2008**
(21) Application number: 07123361.3
(22) Date of filing: 17.12.2007
(51) Int. Cl.: B29D 30/06, B29C 33/20, B29C 35/02

(54) **Three piece tire mold**

(30) Priority: 20.12.2006 US 642441
(71) Applicant: THE GOODYEAR TIRE & RUBBER COMPANY, Akron, OH 44316-0001 (US)
(72) Inventor: Bachochin, Todd Andrew, Berlin Center, OH 44401 (US); Haydu, Jr., William Andrew, Akron, OH 44313 (US); Ivery, Larry Pete, Akron, OH 44320 (US); Niessen, William Frederick, Cuyahoga Falls, OH 44223 (US); McBride, Michael Liam, Akron, OH 44312 (US); Rieger, Donald William, Stow, OH 44224 (US)
(74) Representative: Kutsch, Bernd

(57) **Abstract**

The invention provides a tire mold (10) having a first mold half (12), a second mold half (14), and a center ring portion (16) formed of a plurality of tread segments (19). Each mold half (12, 14) has an inner surface with a sidewall molding portion and each of said tread segments has an inner surface having a tread molding portion, each tread molding portion terminating at a first split plane (30) and a second split plane (38). Each of the center ring segments (19) further comprises a first segment register surface (36) for engagement with a first mold register surface (34) of the first mold half (12) and a second segment register surface (41) for engagement with a second mold reverse register surface (39) of the second mold half (14). Each of the tread segments (19) has a radially outward flange (42) forming a hinge for rotatably mounting each tread segment (19) to the second mold half (14).

## Description

### Field of the invention

The invention relates to tire molds, and more particularly to tire molds having center segments which are movable radially outward during opening of the tire mold to facilitate extraction of the tire from the mold.

### Background of the Invention

A modern trend in tire design is to have tread patterns which extend down the face of the sidewall and also have deep, nonskid tread depths. Prior art molds due to their design make it difficult to extract such tires from the mold without damaging the tread. One type of mold used to manufacture aggressive tread tires is a three piece mold, which has center segments that can move or tilt away from the tire when the tire is released from the mold. These prior art tire molds typically have hinge design problems due to the cyclic and heavy loads on the hinge. Further, these type of molds typically utilize two different materials. Steel is often used predominately throughout the mold, while aluminum castings are used for the tread plates. Because of the dissimilar expansion rates of the two materials, rubber flash often occurs. Thus an improved mold is desired which overcomes these difficulties.

### Summary of the Invention

The invention relates to a tire mold according to claim 1.

Dependent claims refer to preferred embodiments of the invention.

### Definitions

"Axial" and "axially" means the lines or directions that are parallel to the axis of rotation of the tire or tire mold.

"Circumferential" means lines or directions extending along the perimeter of the surface of the annular tread mold perpendicular to the axial direction.

"Radial" and "radially" mean directions radially toward or away from the axis of rotation of the tire or tire mold.

"Sidewall" means a portion of a tire between the tread and the bead.

### Brief Description of the Drawings

The invention will be described by way of example and with reference to the accompanying drawings in which:
FIG. 1 is a cross-sectional view of one half of an annular tire mold shown in the closed position;
FIG. 2 is a cross-sectional view of the tire mold of Figure 1 shown in the open position;
FIG. 3 is a top view of a mold center segment and hinge;
FIG. 4 is a side view of the mold center segment and hinge of Figure 3;
Fig. 5 is a view of the mold center segment in the direction 5-5 of Figure 4;
Figs. 6A and 6B are exploded, assembled views of the second mold half shown with an alignment key and the mating center segment, respectively;
Fig. 7 is a top view of the mold assembly; and
Fig. 8 is a perspective view of the alignment key.

### Detailed Description of the Invention

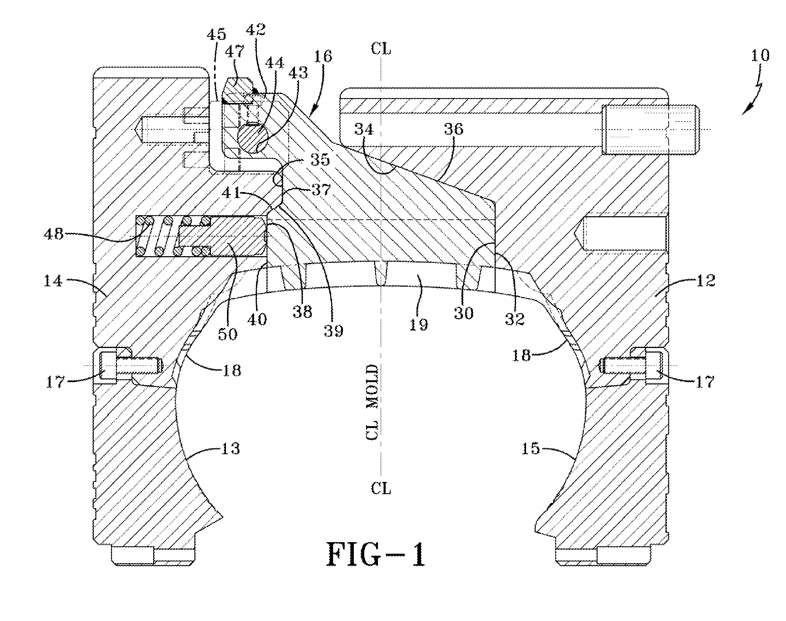

Referring to FIG. 1, a cross-sectional view of one half of a annular tire mold 10 is shown having a first mold half 12, a second mold half 14 and a center ring 16. The first mold half 12 and second mold half 14 may have sidewall ring inserts (not shown) which are interchangeable with other inserts for different tires. Preferably, each mold half 12, 14 comprises annular member made of steel which is machined directly with the desired sidewall pattern 18 using three dimensional CNC machining, milling or engraving techniques. While steel is the preferred material of choice, other materials may be used. The first mold half 12 and the second mold half 14 may each further comprise an interchangeable sidewall member 13, 15 which is preferably a one piece annular ring of the same material as the mold halves 12, 14. The sidewall rings may be connected to the respective mold halves by removable fasteners 17. The center tread ring 16 is formed of multiple segments wherein each segment may have a tread insert 19 which may be interchangeable for different tires. Preferably, the center tread ring segments are comprised of steel and machined directly with the desired tread pattern. In the present embodiment, the tire mold 10 comprises twelve segments 16, however, the number of segments may also range, for instance, from 9 to 13 depending upon the mold requirements.

The first mold half 12 has a mold split plane surface 30 for engagement with a center ring split plane surface 32 spaced from a mold centerline C_{L}. The first-mold half 12 also has a first register surface 34 for engagement with a center ring register surface 36. The first register surface 34 may have a concave conical shape and the center ring register surface 36 may have a convex shape inclined surface. The contact surface 34 and the center ring surface are inclined at an angle of 20°, although they may be inclined in the range of 15 to 30 degrees.

The second mold half 14 has a second mold split plane surface 38 for engagement with a second center ring split plane surface 40 spaced apart from the mold-center line C_{L} The second mold half 14 also has a second reverse register surface 39 for engagement with a second center ring register surface 41. Located adjacent the reverse register surface 39 is a mold landing 37 which is also located adjacent the hinge. Mold landing 37 is positioned for mating with reverse landing 35. The reverse register 39 functions to lock the diametrical positioning of the segments thus acting as a diametrical mechanical stop with mating landing surface 41. The reverse register 39 also functions to reduce hinge stress due to bladder pressure by restricting outward movement of the segments. Located adjacent the reverse register surface 39 is optional spring means in the form of a plurality compression springs 48 disposed in spring seats 50 in the lower split plane surface 38. The spring means facilitate the opening and closing operation of the mold 10.

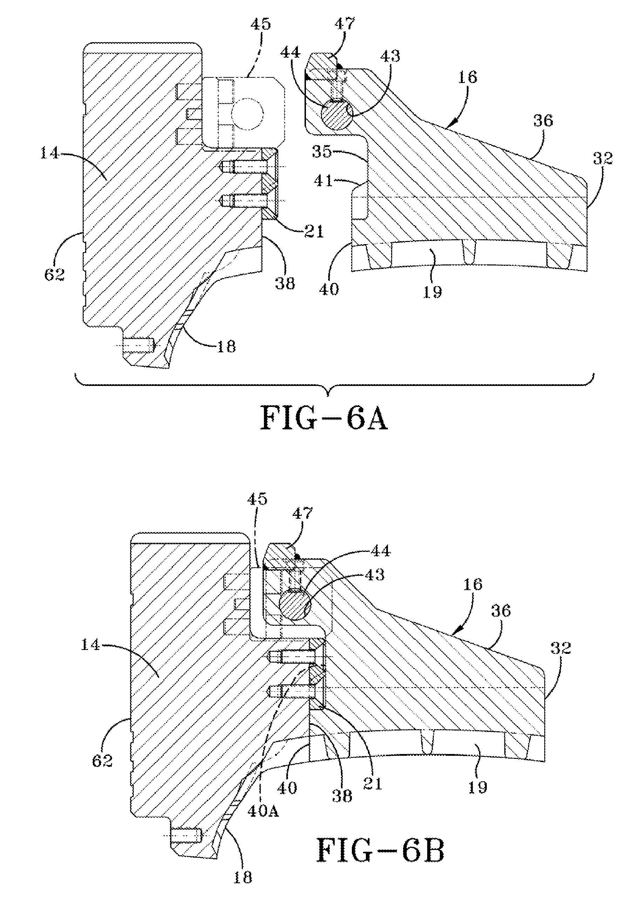

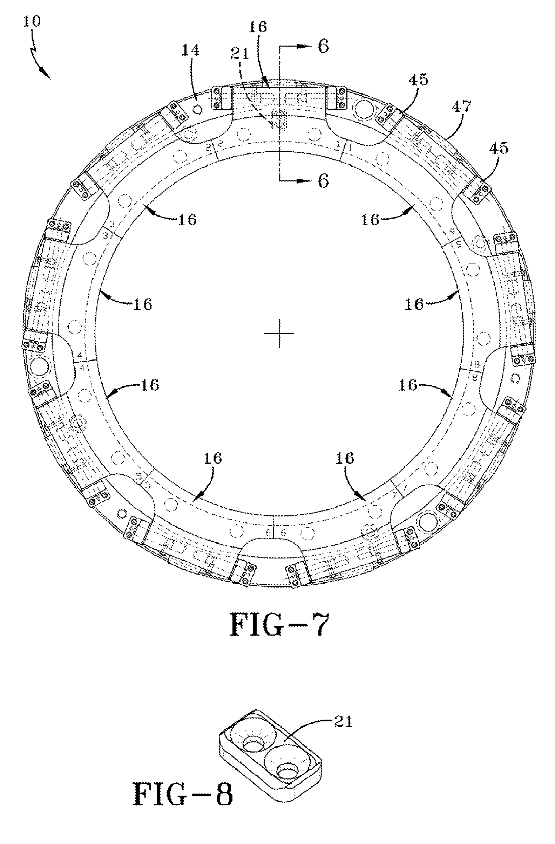

As shown in figures 6A and 6B, the second mold half 14 further comprises an alignment key 21 in one of the segments for orienting the tread segment ring 16 with respect to the second mold half 14. The alignment key as shown in Figure 8 is preferably rectangular in shape and is positioned along the lower split plane surface. The alignment key 21 is positioned for engagement with mating a complementary shaped cutout. The key can be any desired shape and is not limited to rectangular. The alignment key 21 further functions to reduce rotational forces on hinge pins and brackets by restricting rotational movement of the segments.

### Hinge Design

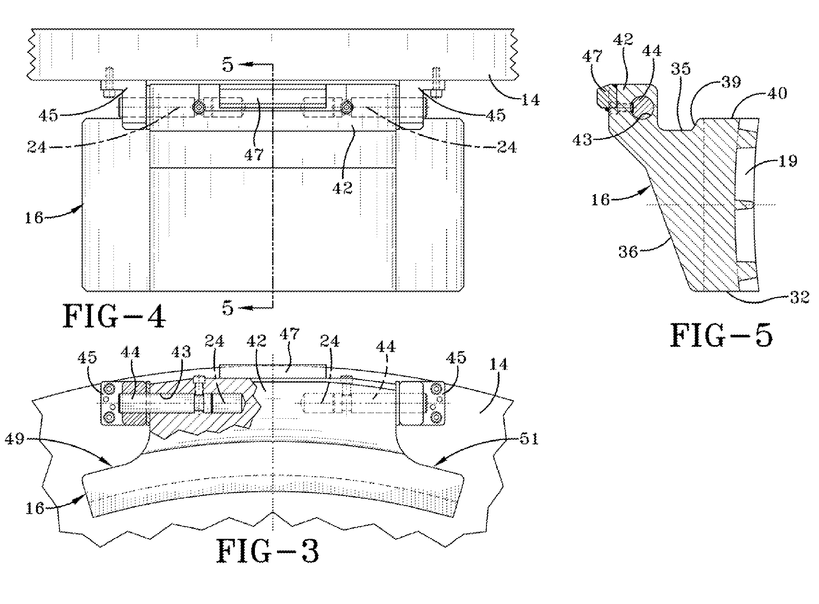

Each of the center ring segments 20 as shown in Figure 5, further comprise a flanged end 42 having a hole 43 therein for receiving a hinge pin 44. Thus the flanged end of the center ring segments 20 form the hinge about which the segments rotate. As best shown in Figure 4, the flanged segment end 42 comprises a substantial portion of the segment chord length. Flanged ends 42 are mounted between L shaped hinge blocks 45 mounted on second mold half 14. Two hinge pins 44 located on each side pivotally interconnect the flanged ends 42 with hinge blocks 45. A replaceable stop block 47 is mounted on the outer radial surface of the center segments 16. The stop block 47 contacts the top of the second mold surface 14 when the center segment is pivoted to the open position.

The hinge axis 24 of each segment 16 is positioned as close to the outer periphery of the lower mold half 14 as is feasible for the mold size. The hinge axis is preferably positioned axially outward of the mold split plane surface 38 or between the lower mold half bottom surface 62 and the mold split plane surface 28. The hinge pin location reduces the lateral movement of the segments and reduces the contact between adjoining tread features during opening and closing of the mold.

As best shown in Figure 3, the segments have a reduced cross-sectional profile in the areas 49, 51 where a large portion of the metal has been machined away.

### Mold Operation

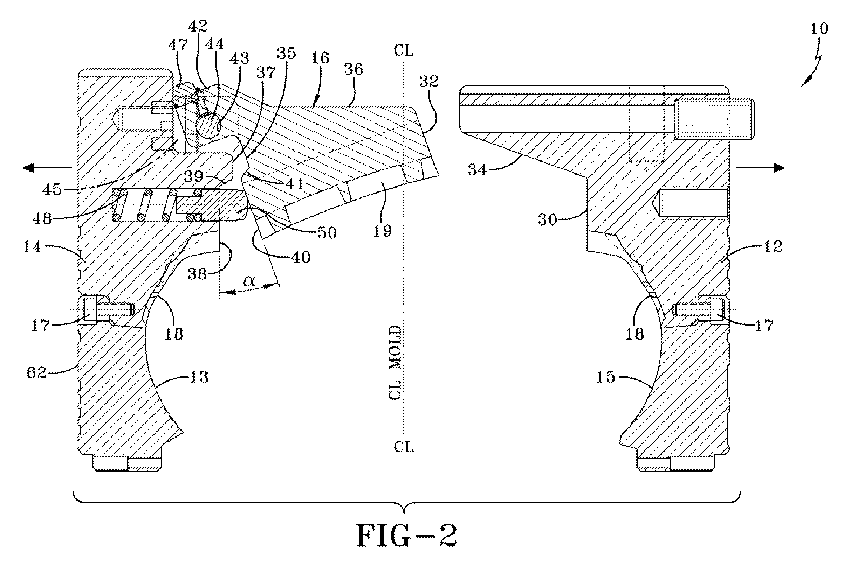

In operation, a green tire (not shown) is placed in the open tire mold wherein the center ring 16 is rotated away from the second mold half as shown in FIG. 2. After the tire is placed in the second half of the mold, the weight of the green tire causes the center ring segments 16 to rotate back into a position proximate the closed position. As the first mold half 12 is moved towards the second mold half 14, the first register surface 34 of the first mold half 12 engages the first register surface 36 of the center ring segment to facilitate alignment of the mold halves with respect to each other. Then the second mold half reverse register surface 39 engages the second register surface of the center segments to ensure alignment of the center segments with the second half of the mold. After a final closing force is applied to the mold 10 from the top mold half actuating surface, the compression springs 48 are compressed to the position shown in FIG. 1. The mold is them placed in a pot heater in order to mold and cure the tire at the desired temperature and pressure for the time necessary to cure the tire.

After completion of the cure cycle, the first mold half 12 is lifted away from the second mold half 14. During the movement of the tire upward out of the second mold half 14, the tread of the tire remains in engagement with the tread insert 19 of the center ring 16 and each segment 16 is pulled upward away from the segment mold half 14. As the center ring 16 is moved upwardly, each segment 16 rotates about the respective hinge axis 24 and rotates radially outward away from the tire disengaging the tread insert 19 from the tread of the tire without damaging the tread. This movement may continue until the stop surface 47 engages the second mold half 14. After the tire is removed, each segment 16 falls back into the position shown in FIG. 1 and this movement may be cushioned by the compression springs 48.

## Claims

1. A tire mold comprising a first mold half (12), a second mold half (14), and a center ring portion (16) formed of a plurality of tread segments (19); wherein each mold half (12, 14) has an inner surface with a sidewall molding portion and each of said tread segments (19) has an inner surface having a tread molding portion, each tread molding portion terminating at a first split plane (30) and a second split plane (38); wherein each of said center ring segments (19) further comprises a first segment register surface for engagement with a first mold register surface (34) of the first mold half (12); wherein each of said center (36) ring segments (19) further comprises a second segment register surface (41) for engagement with a second mold reverse register surface (39) of the second mold half (14); and wherein each of said tread segments (19) has a radially outward flange (42) forming a hinge for rotatably mounting each tread segments (19) to the second mold half (14).

2. The tire mold of claim 1 wherein the centerline of the hinge is located between the second mold split plane (38) and the outer circumferential edge of the second mold half (14).

3. The tire mold of claim 1 or 2 wherein the first mold half (12), the second mold half (14) and the center segments (19) are formed of steel or wherein the first mold half (12), the second mold half (14) and the center segments (19) are formed of the same metal.

4. The tire mold of at least one of the previous claims wherein the second mold half (14) further comprises a landing (37) located adjacent said second mold reverse register surface (39) and which is positioned for engagement with a landing (35) of said center segment (19).

5. The tire mold of at least one of the previous claims wherein the length of the radially outward hinge flange (42) of each center segment (19) is in the range of 40% to 100% of the center segment chord length.

6. The tire mold of at least one of the previous claims wherein the radially outward hinge flange (42) further comprises a stop block (47) to prevent over rotation of each segment (19).

7. The tire mold of at least one of the previous claims wherein each mold half (12, 14) is a one piece annular member removably connected to an interchangeable annular sidewall ring (13, 15).

8. The tire mold of at least one of the previous claims wherein the second mold register surface (39) has an axially projecting tab for engagement with a mating groove surface of the center segment second register surface (41), and, optionally wherein the second mold register surface excluding the axially projecting tab is substantially radial in orientation.

9. The tire mold of at least one of the previous claims wherein one of the center segments (19) has an alignment key (21) on the center segment second register surface (41) for aligning with the second mold half (14).

10. The tire mold of at least one of the previous claims wherein each center segment (19) has a single hinge connected to said second mold half (14).
